# EUROPÄISCHE PATENTSCHRIFT

(11) **EP 1 035 034 B1**
(45) Veröffentlichungstag und Bekanntmachung des Hinweises auf die Patenterteilung: **31.08.2005**
(21) Anmeldenummer: 99810225.5
(22) Anmeldetag: 12.03.1999
(51) Int. Cl.: B65D 83/00, G01F 11/08, G01F 11/26, B65D 25/52

(54) **Kunststoffbehälter und dazu passendes Dosierelement mit Verschluss**
Plastic container and corresponding dosing element with closure
Récipient en plastique et dispositif de dosage correspondant avec couvercle

(43) Veröffentlichungstag der Anmeldung: 13.09.2000
(73) Patentinhaber: Createchnic AG, 8309 Nürensdorf (CH)
(72) Erfinder: Seelhofer, Fritz, 8315 Lindau (CH); Suarez, Fernando, 8048 Zürich (CH)
(74) Vertreter: Schneider Feldmann AG Patent- und Markenanwälte

(56) Entgegenhaltungen:
- EP-B- 1 102 969
- DE-A- 3 236 552
- DE-A- 3 618 559
- FR-A- 2 580 259
- US-A- 3 581 953

## Beschreibung

Die vorliegende Erfindung betrifft einen Kunststoffbehälter und ein Dosierelement zur dosierten Abgabe von fliess-, riesel- oder schüttfähigen Medien, gemass Oberbegriff des Patentanspruches 1.

Hierbei stellt normalerweise der Kunststoffbehälter einen Vorratsraum dar und das Dosierelement umfasst eine Dosierkammer. Der Austritt des Mediums erfolgt vom Vorratsraum über die Dosierkammer nach aussen.

Solche oftmals auch als Dosiersysteme bezeichnete Vorrichtungen sind in verschiedensten Ausführungsformen bekannt. Während der Vorratsraum praktisch bei allen Lösungen eine Kunststoffflasche ist, ist die Gestaltung der Dosierkammer völlig unterschiedlich. In der einfachsten Form ist die Dosierkammer ein separater Becher, der über den Verschluss, der den Vorratsraum verschliesst, gestülpt ist. Diese Lösung ist einfach in der Herstellung, an sich verständlich und relativ preiswert in der Fertigung.

Problematisch ist jedoch die Handhabung. Ist beispielsweise der Vorratsraum relativ gross und der Becher, der als Dosierkammer dient, klein, so wird vielfach Material verschüttet. Oftmals wird auch der Becher nicht vollständig gefüllt, so dass eigentlich eine Unterdosierung stattfindet.

Aus diesen Gründen ist man dazu übergegangen, verschiedene Systeme zu entwickeln, bei denen die Dosierkammer Teil eines komplexen Verschlusssystemes bildet. Hierbei werden verschiedene bewegliche Teile vorgesehen, bei denen eine feste Menge eines fliessfähigen Mediums erst in die Kammer einfliessen kann, worauf die Kammer in einer aktiven Bewegung gegenüber dem Vorratsraum verschlossen wird und hierauf die dosierte Menge aus der Dosierkammer nach aussen strömen kann oder nach aussen gefördert wird. Dies ist davon abhängig, ob das Dosiersystem mit einem Kolbenprinzip arbeitet oder nicht. Beide Varianten sind in diversen Ausführungsformen bekannt.

Solche Dosiersysteme sind meist komplex und entsprechend kostspielig, weshalb sie sich nur dort durchgesetzt haben, wo das zu dosierende Medium relativ teuer ist. So sind solche Systeme insbesondere bei Medikamenten hinlänglich bekannt. Auch bei der Dosierung verschiedenster Feinchemikalien oder Klebstoffen kommen solche Systeme in Frage, insbesondere auch dann, wenn nach Möglichkeit ein Luftaustausch nach aussen möglichst vermieden werden soll.

Ferner ist beispielsweise aus der US-3581953-A ein Dosiersystem bekannt, bei den der Kunststoffbehälter aus einem Vorratsraum und einer damit verbundenen Dosierkammer besteht. Solche Systeme sind insbesondere bei Flüssigkeiten bekannt, wobei die Dosierkammer einen Siphonraum darstellt. Die Dosierung erfolgt dadurch, dass man zuerst Flüssigkeit in den Siphonraum einströmen lässt und nachher den Siphonraum entleert. Bei etlichen dieser Siphonsysteme ist jedoch auch die Dosierung nicht vollständig korrekt gelöst, insbesondere wenn es sich dabei um deformierbare Kunststoffbehälter handelt, wobei durch oftmals auch ungewollten Druck auf den Kunststoffbehälter während man den Dosierbehälter entleert bereits wieder Medium vom Vorratsraum in den Dosierraum strömen kann, so dass eine erhöhte Dosis abgegeben wird.

Hinzu kommt, dass auch bei diesem System praktisch nur die Dosierung von Flüssigkeiten möglich ist. Gerade die Abgabe von rieselfähigen oder schüttfähigen Medien lässt sich kaum mittels Siphonsystemen realisieren. Dies ist ebenfalls bei den Systemen, bei denen die Dosierung mittels Kolbenzylindereinheiten erfolgt, kaum möglich.

Letztlich ist aus der FR-A-2'580'259 ein Kunststoffbehälter gemäss dem Oberbegriff des Patentanspruches 1 bekannt, bei dem ein Dosierelement zur Betätigung mit einem Verschluss koppelbar ist oder eine Verbindung zwischen einem Dosierelement und einem schwenkbaren Ausgussschnabel besteht, um das Dosierelement von einer kommunizierenden Lage in einer dichtenden Lage zu bewegen.

Es ist eine Aufgabe der vorliegenden Erfindung, einen Kunststoffbehälter zu schaffen, der besonders geeignet ist zur Verwendung mit Dosierelementen oder anderen Mitteln, die eine Aktivbewegung vom Mittel relativ zum Vorratsraum des Kunststoffbehälters erfordern, ohne dass hierzu eine kuppelnde Verbindung zwischen Dosierelement und einem zur Betätigung dienenden Teil erforderlich ist.

Diese Aufgabe löst ein Dosierelement und Kunststoffbehälter mit den Merkmalen des Patentanspruches 1. Dank der erfindungsgemäss möglichen axialen Relativbewegung des Behälterhalsrandes zum Vorratsraum des Kunststoffbehälters, kann dieser eine Bewegungskomponente übernehmen.

Es ist eine weitere Aufgabe der vorliegenden Erfindung, ein Dosierelement und Kunststoffbehälter zu schaffen, das ein möglichst preiswertes und einfach herstellbares Dosiersystem zu schaffen erlaubt, welches sowohl für flüssige als auch für riesel- oder schüttfähige Medien geeignet ist.

Das Dosierelement ist besonders einfach, da es selbst keine aktivbewegenden Elemente aufweist. Die aktive Bewegung übernimmt der Kunststoffbehälter.

Weitere vorteilhafte Ausgestaltungsformen des Erfindungsgegenstandes gehen aus den abhängigen Ansprüchen hervor und sind in der nachfolgenden Beschreibung bezüglich Funktion und Bedeutung erläutert.

In der beiliegenden Zeichnung sind zwei Ausführungsformen des Erfindungsgegenstandes vereinfacht dargestellt und anhand der nachfolgenden Beschreibung erläutert. Es zeigt:
- Figur 1: einen Kunststoffbehälter für sich allein in einem Vertikalschnitt;
- Figur 2: einen Kunststoffbehälter mit Dosierelement gemäss der Erfindung in einem Vertikalschnitt in der Dosierlage und
- Figur 3: in der Abgabelage, in welcher ein Dosierraum des Dosierelementes entleert wird. In der
- Figur 4: ist eine Variante dargestellt, wiederum in der Dosierlage, in welcher der Dosierraum gefüllt wird und in

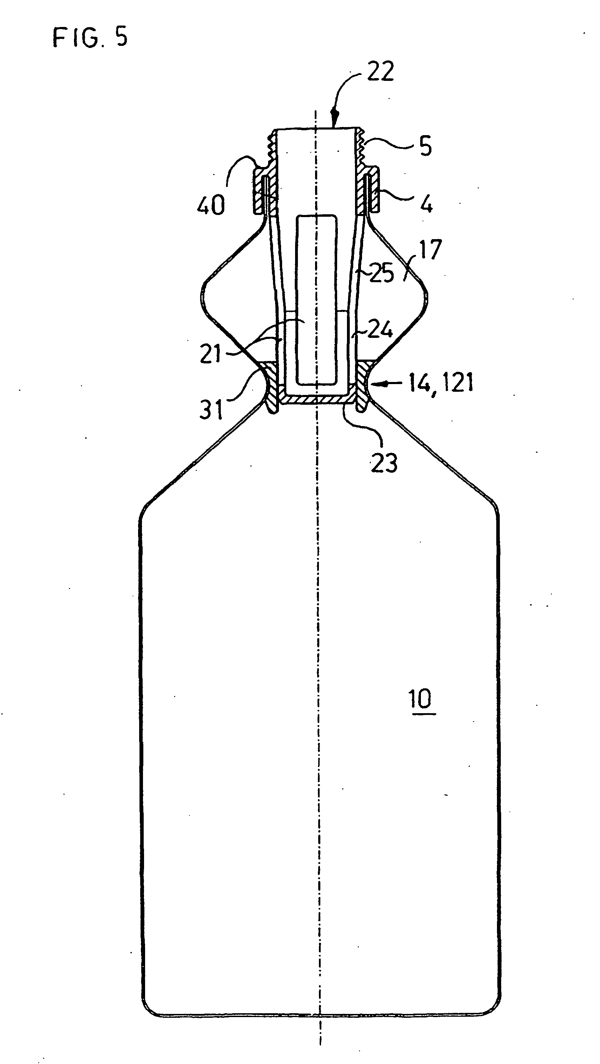

- Figur 5: in der Lage, in welcher der Dosierraum entleert wird.
- Figur 6: zeigt eine Variante eines Dosierelementes, welches einstückig mit einem Verschluss versehen ist in der Dosierlage und
- Figur 7: in der Abgabelage. Während
- Figur 8: eine Ausführung zeigt, mit einem Dosierelement, welches besonders für riesel- oder schüttfähige Medien geeignet ist, wiederum in der Dosierlage und
- Figur 9: in der Abgabelage. Schliesslich ist in der
- Figur 10: eine Variante für flüssige Medien gezeigt, mit einem siphonähnlichen Dosiersystem in der Dosierlage und
- Figur 11: in der Abgabelage.

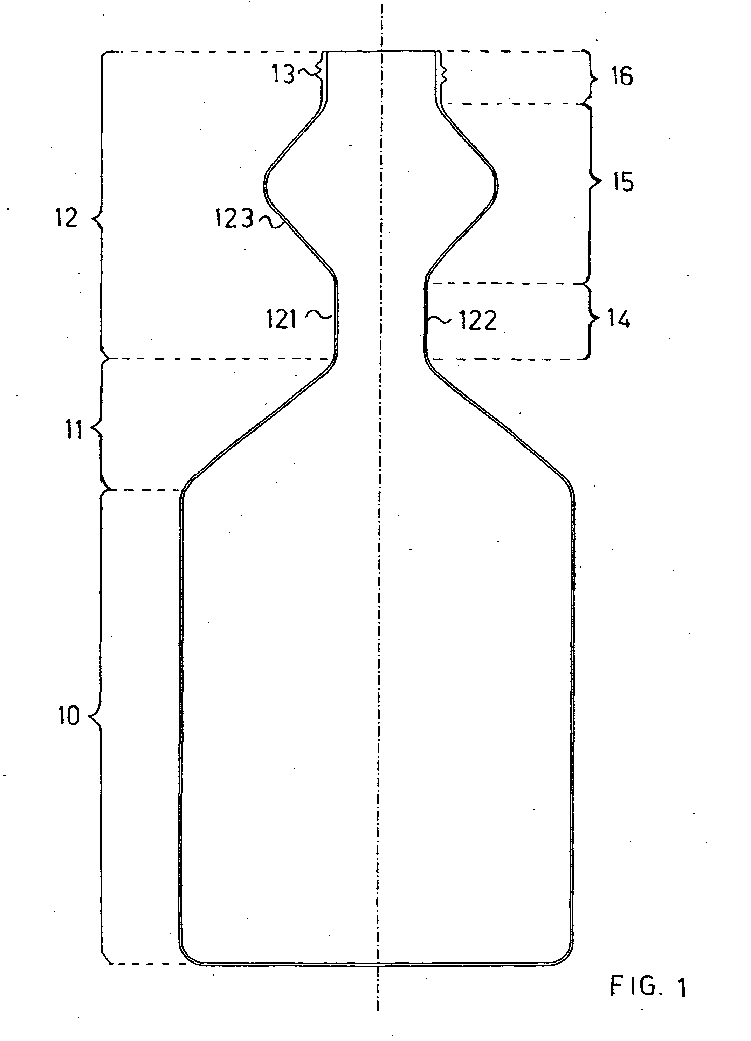

In der Figur 1 ist der Kunststoffbehälter für sich in einem vertikalen zentrischen Schnitt dargestellt. Der Kunststoffbehälter ist gesamthaft mit 1 bezeichnet. Er umfasst wie üblich einen Vorratsraum 10. An diesen schliesst eine Schulterpartie 11 an, die in den Behälterhals 12 übergeht. Der Behälterhals weist hier Befestigungsmittel 13 auf, die zur Befestigung eines Verschlusses oder eines Dosierelementes geeignet sind. Im dargestellten Fall ist das Befestigungsmittel ein Aussengewinde. Selbstverständlich kommen auch andere Befestigungsmittel in Frage, wie beispielsweise Haltenocken oder ein Haltewulst, beides Mittel, mit denen ein Verschluss oder ein Dosierelement aufgesprengt oder aufgepresst werden können. Anderweitige Befestigungsmittel, wie sie aus dem Stand der Technik bekannt sind, kommen selbstverständlich ebenfalls in Frage.

Der Behälterhals 12 hat deutlich erkennbar drei Bereiche, die hier nach der Funktion benannt werden. Direkt an der Schulterpartie 11 anschliessend ist eine Einschnürung 121 als Dichtbereich 14 erkennbar. Der Dichtbereich kann in der axialen Ausdehnung unterschiedlich lang gestaltet werden und so einen Führungsbereich 122 bilden. Wie später noch beschrieben werden wird, kann der Führungsbereich auch durch ein separates Führungselement gebildet werden.

Dem Dichtbereich 14 folgt in Ausgiessrichtung ein axial komprimierbarer Bereich 15, der aus einer oder mehreren in axialer Richtung hintereinander angeordneten ringförmigen Falte 123 oder ringförmigen Falten gestaltet ist. Dieser axial komprimierbare Bereich 15 lässt sich durch Druck oben auf den Behälterhals 12 in seiner axialen Ausdehnung verkürzen. Durch die Eigenelastizität nimmt er seine Ausgangslage wieder ein, sobald der Druck in axialer Richtung wegfällt. Sollte die Eigenelastizität nicht ausreichen, so kann zusätzlich in den komprimierbaren Bereich eine hier nicht dargestellte Druckfeder angeordnet werden. Dies kann aber praktisch immer vermieden werden, indem man die Rückstellkraft allein dadurch verändert, dass man die Wandstärke der ringförmigen Falten in gewissen Bereichen verdickt. Diese Technik ist dem kunststoffverarbeitenden Fachmann, der sich mit der Herstellung von sogenannten Federbalgen beschäftigt hat, jedoch bekannt.

Dem axial verformbaren Bereich 15 folgt schliesslich noch der Ausgussbereich 16, an dem das bereits erwähnte Befestigungsmittel 13, hier das Aussengewinde, angeordnet beziehungsweise angeformt ist.

Wie nachfolgend noch zu beschreiben ist, kann ein solcher Kunststoffbehälter mannigfaltig eingesetzt werden. Die nachfolgenden ebenfalls erfindungsgemässen Ausführungsformen sind keineswegs abschliessend.

Der erfindungsgemässe Kunststoffbehälter kann auch als einfache Flasche verwendet werden ohne die Ausnutzung des axial komprimierbaren Bereiches. Die Einschnürung 121 würde dann lediglich als Haltebereich dienen.

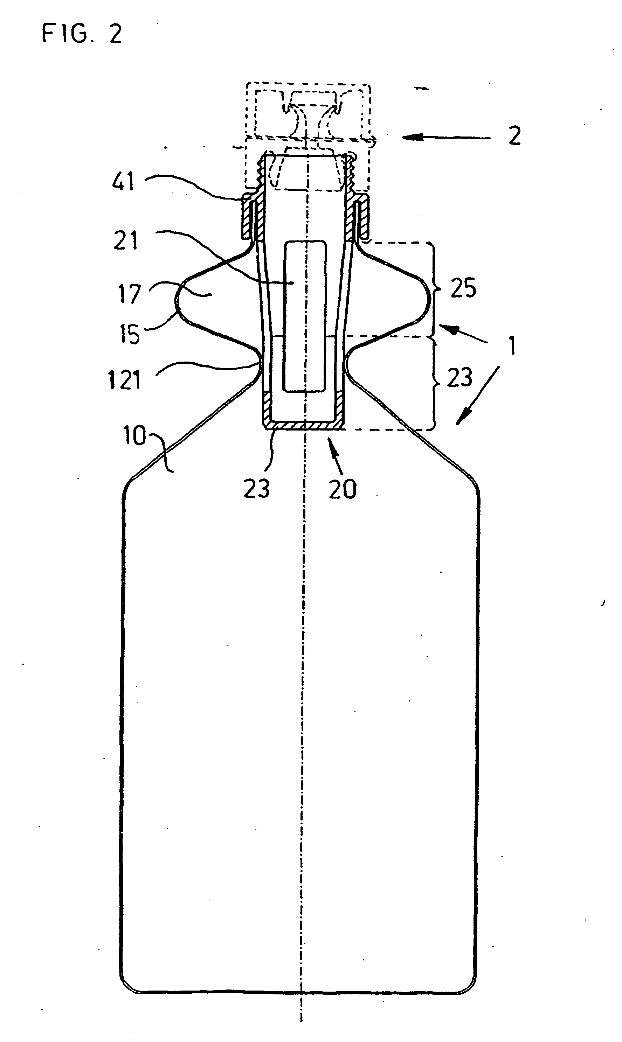

In der Figur 2 ist eine erste Ausführungsform eines zum Kunststoffbehälter dazugehörendes Dosierelement in einem Vertikalschnitt dargestellt. Mit 1 ist wiederum gesamthaft der Kunststoffbehälter bezeichnet. In der hier dargestellten Ausführungsform ist der Kunststoffbehälter 1 einstückig gefertigt, insbesondere hier als geblasene Flasche dargestellt. Diese geblasene Flasche hat zwei erkennbare Räume, nämlich einen Vorratsraum 10 und den axial komprimierbaren Bereich 15. In Ausgussrichtung ist der komprimierbare Bereich 15 dem Vorratsraum 10 nachgeschaltet. Prinzipiell ist es durchaus auch möglich, den Vorratsraum 10 als geblasenes Behältnis zu fertigen, während der komprimierbare Bereich 15 mit dem Ausgussbereich 16 beispielsweise als Spritzgusselement gesondert gefertigt sein kann. Der komprimierbare Bereich 15 lässt sich dann mit dem Vorratsraum 10 auf verschiedenste Arten verbinden. Dies kann sowohl rein mechanisch durch eine Schraubverbindung geschehen, als auch mittels Schweissung oder Verklebung. Die Verbindung erfolgt im Bereich der Einschnürung 121. Insbesondere wenn die Verbindung der beiden Teile mechanisch erfolgt, kann es sinnvoll sein, im Bereich der Einschnürung 121 die Verbindung gleichzeitig als Führungbereich 122 zu gestalten. Aber auch zur Verschweissung oder Verklebung kann der Führungsbereich 122 zusätzlich vorteilhaft genutzt werden. Im Falle einer mechanischen Kupplung von Vorratsraum 10 und komprimierbarem Bereich 15 wird man das Führungselement 122 zweiteilig gestalten, beispielsweise als konzentrische, ringförmige Teile, die miteinander verschraubt werden können.

Am Behälterhals 12 ist hier lagefest ein Dosierelement 20 befestigt. Dieses Dosierelement 20 durchsetzt den axial komprimierbaren Bereich 15 vollständig und reicht bis in den Bereich der Einschnürung 121. Effektiv ragt sogar das untere Ende des Dosierelementes 20 mindestens ein Stück weit durch die Einschnürung 121 hindurch in den Vorratsraum 10. Das zapfenförmige Dosierelement 20 ist in der Einschnürung 121 gleitend gelagert. Das zapfenförmige Dosierelement 20 weist einen geschlossenen Boden 23 auf und bildet im entspannten Zustand des axial komprimierbaren Bereiches 15 einen verschliessenden Zapfen, der gleich einem Korken in der Einschnürung 121 liegt. Das zapfenförmige Dosierelement 20 weist ferner einen am geschlossenen Boden 23 anschliessenden zylindrischen Abschnitt 24 auf und geht dann in einen konischen Abschnitt 25 über, der direkt am Ausgussbereich 16 des Flaschenhalses anliegt oder, wie hier dargestellt, in einen Ausgussbereich 16' übergeht. Das zapfenförmige Dosierelement 20 weist mehrere Längsöffnungen 21 in den seitlichen Wänden auf, die sich vom unteren zylindrischen Abschnitt über den nachfolgenden konischen Abschnitt 25 bis in den Bereich nahe des Flaschenausgusses 16 hinauf erstrecken. Zuoberst ist das zapfenförmige Dosierelement 20 vollständig offen und bildet so entweder direkt den Ausguss oder kommuniziert mit einem Ausguss, der Teil eines auf dem Flaschenhals 12 aufgesetzten Verschlusses bildet.

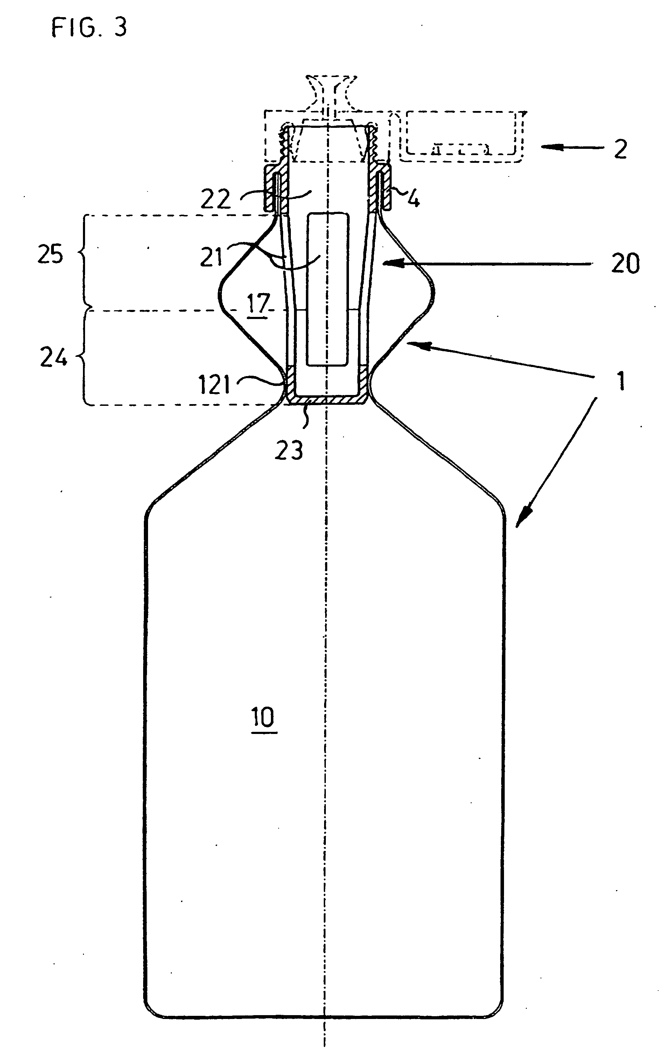

In der Figur 3 ist ein erfindungsgemässer Kunststoffbehälter mit erfindungsgemässem Dosierelement 20 mit Verschluss in der Abgabelage dargestellt. Der Verschluss 2, der hier als Schnappscharnierverschluss strichliniert dargestellt ist, bestehend aus Unterteil und einer scharnierend damit verbundenen Kappe, ist in dieser Lage offen. Dreht man den Behälter 1 um, so kann der gesamte Inhalt des Dosierelementes 20 durch die seitlichen Oeffnungen 21 und die Ausgussöffnung 22 aus dem Raum 17, der vom axial komprimierbaren Bereich umschlossen ist, direkt oder via den Verschluss 2 nach aussen gelangen. In dieser Position ist der balgförmige, variable Raum 17 völlig entspannt. Der untere Bereich des Dosierelementes 20 mit seinem geschlossenen Boden 23 liegt im Bereich der Einschnürung 121 und dichtet so den Durchgang vom Vorratsraum 10 in den variablen Raum 17 ab. Ist das Dosierelement 20 und der variable Raum 17 entleert, wird man den Verschluss 2 verschliessen. Während nunmehr der Verschluss geschlossen ist, kann man auf denselben drücken, wodurch die balgförmige, axial komprimierbare Bereich 15 in axialer Richtung verkürzt wird. Weil das zapfenförmige Dosierelement 20 mit dem Flaschenhalsbereich 16 verbunden ist, wird durch die axiale Verkürzung des Bereiches 15 das zapfenförmige Dosierelement 20 mit seinem unteren Teil in den Vorratsraum 10 hineingestossen. Dabei gelangen die seitlichen Oeffnungen 21 kommunizierend in den Vorratsraum 10, so dass durch die seitlichen Oeffnungen 21 Medium aus dem Vorratsraum 10 durch die seitlichen Oeffnungen 21 in das zapfenförmige Dosierelement 20 strömen kann und von diesem wiederum nach aussen in den variablen Raum 17. Ist das Dosierelement und der Raum 17 gefüllt, entfernt man den Druck auf den Verschluss, der komprimierbare Bereich 15 entspannt sich wieder und zieht dabei das zapfenförmige Dosierelement 20 wiederum nach oben, so dass wieder der untere geschlossene Bereich 23 in die Einschnürung zu liegen kommt. Damit ist die kommunizierende Verbindung zwischen Vorratsbehältnis 10 und variablem Raum 17 unterbrochen. Diese Lösung ist insbesondere auch für Behälter geeignet, die auf dem Kopf hängend aufbewahrt werden. Nur während man von unten einen Druck auf den Flaschenhals ausübt, kann der Vorratsraum 10 mit dem variablen Raum 17 in kommunizierende Verbindung gelangen. Solange der Verschluss offen ist, wird man völlig natürlich diesen nicht nach oben drücken wollen.

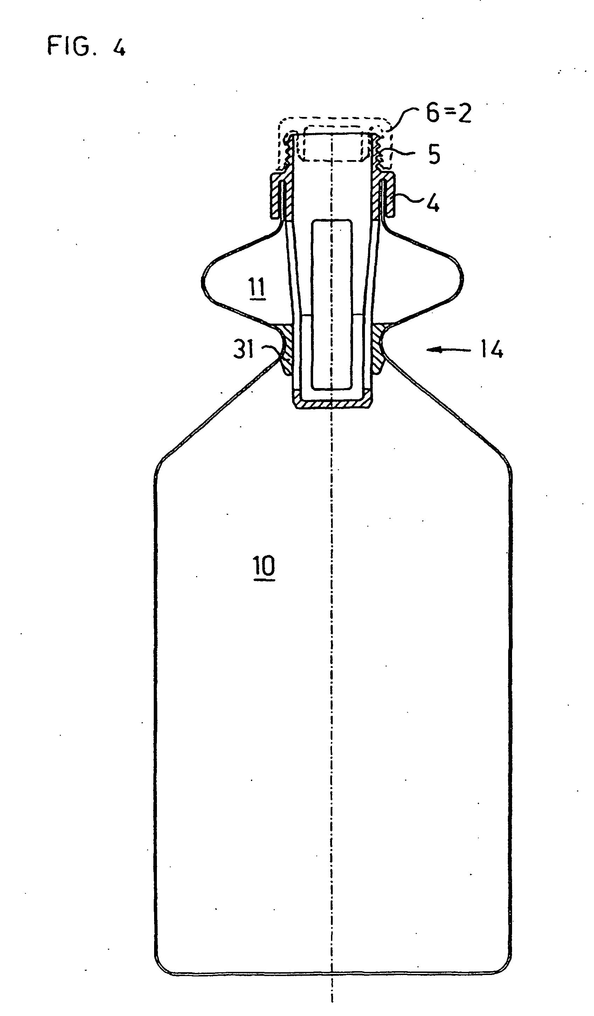

Bei den zuvor gezeigten Varianten ist das zapfenförmige Dosierelement 20 mit einem Kragen 4 versehen. An diesen ist ein Ausgussteil 5 mit Aussengewinde angeschlossen und ein Scharnierverschluss 2 aufgesetzt. In der Figur 4 hingegen ist statt des Scharnierverschlusses ein Drehverschluss 6 strichliniert gezeigt.

In derselben Figur 4 beziehungsweise 5 ist auch der Dichtbereich 14 mit einem gesonderten Teil als Führungsteil 31 gestaltet. Dieser Teil 31 kann bei einem zweiteiligen Behälter 1 während der Montage eingefügt werden. Bei einem einteiligen Behälter verlangt dies, dass die Weite des Ausgussbereiches 16 so gross gestaltet ist, dass der Teil von oben eingeführt und in die korrekte Lage gepresst werden kann.

Der Ausguss des Dosierelementes 20 ist mit 22 bezeichnet und kann formlich beliebig gestaltet werden.

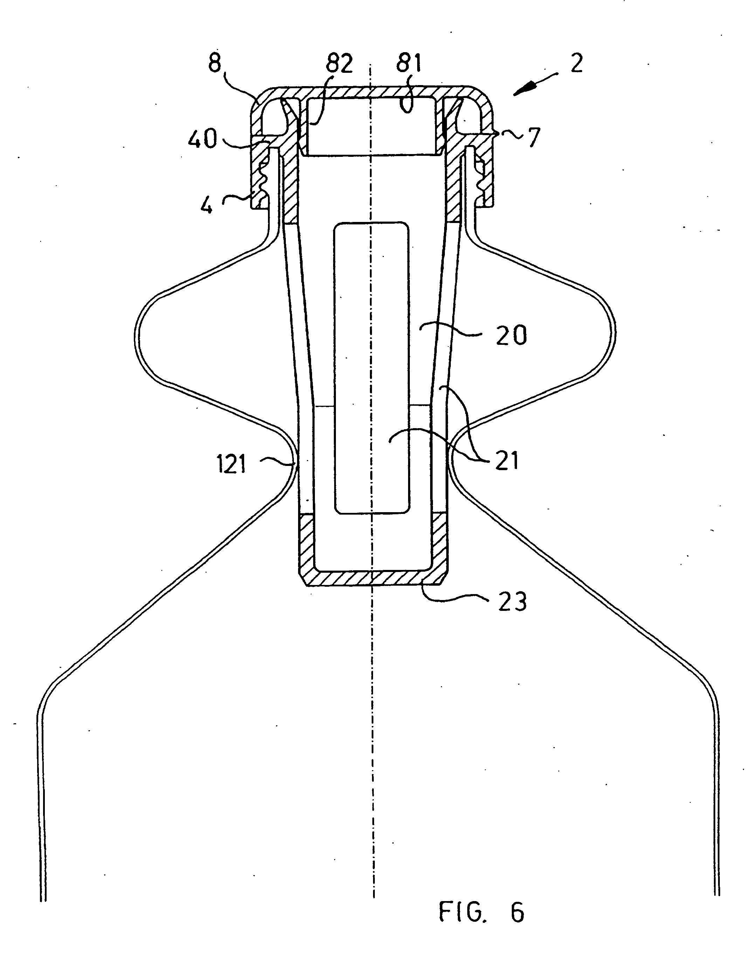

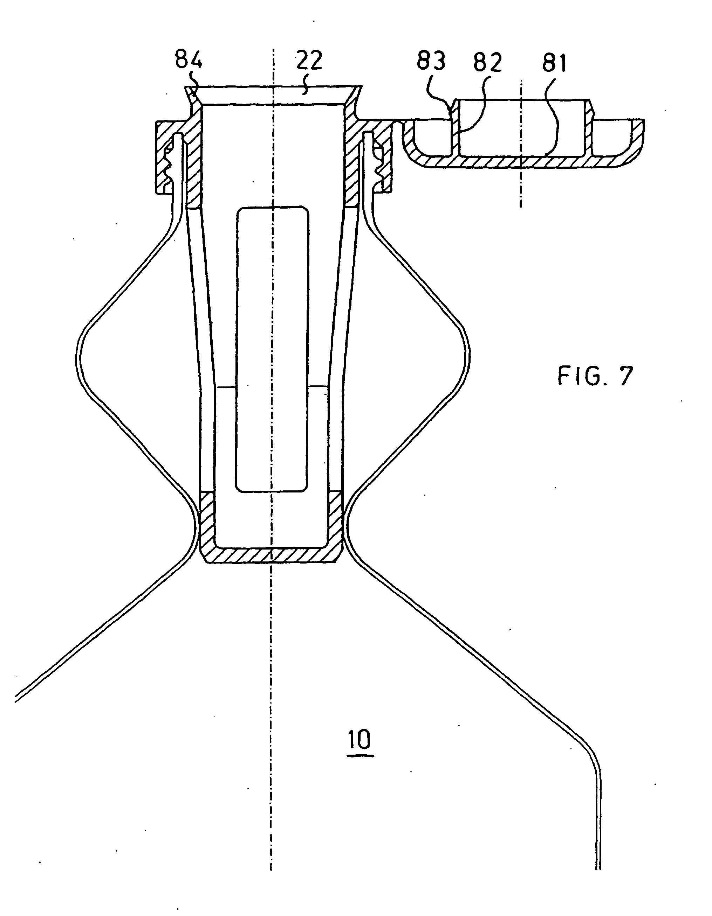

In den Figuren 6 und 7 ist gezeigt, dass das Dosierelement 20 auch gleichzeitig Teil eines Scharnierverschlusses 2 sein kann. Der umlaufende Kragen 4 ist über einen umlaufenden Steg 40 mit dem Dosierelement 20 einstückig verbunden. Ueber das Filmscharnier 7 ist eine schwenkbare Kappe 8 angeformt. Die Kappe 8 hat an der Innenfläche 81 einen Dichtzapfen 82, der in den Ausguss 22 hineinragt und denselben von innen dichtet. Hierzu ist der Dichtzapfen 82 mit einer Dichtwulst 83 versehen. Der Ausguss 22 ist zudem mit einer Ausgusslippe 84 versehen.

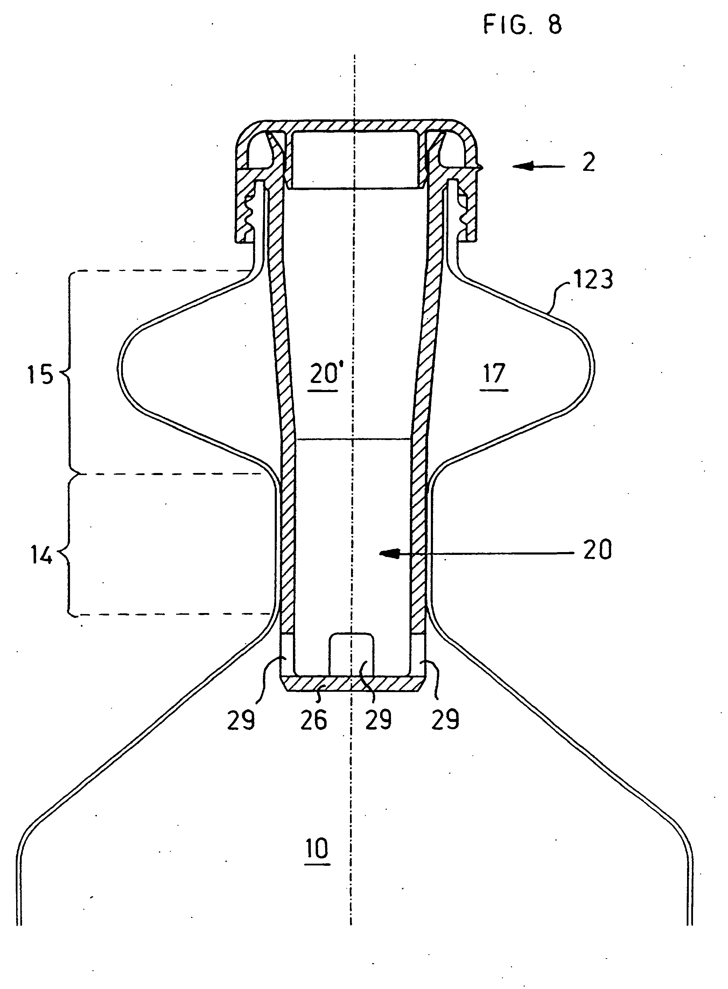

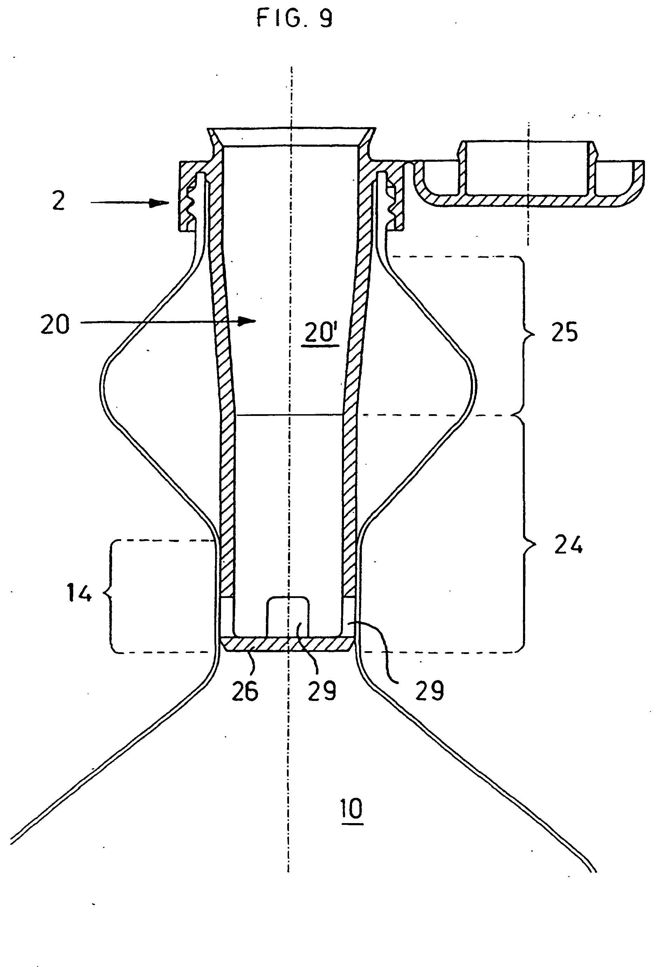

Eine spezielle Ausgestaltung des Dosierelementes 20 ist in den Figuren 8 und 9 detailliert dargestellt. Der Kunststoffbehäler 1 entspricht wiederum der Ausgestaltung gemäss der Figur 1. Der verlängerte Dichtbereich 14 und der axial komprimierbare Bereich 15 sind deutlich erkennbar. Das Dosierelement hat jedoch nur im Bereich nahe dem Boden 23 sich in axialer Richtung nur wenig nach oben erstreckende kommunizierende Oeffnungen 29. Diese Oeffnungen 29 sind in der Lage gemäss Figur 8, der sogenannten Dosierlage, mit dem Vorratsraum 10 des Kunststoffbehälters 1 in kommunizierender Verbindung. Das im Vorratsraum vorhandene Medium kann somit in das zapfenförmige Dosierelement 20 einströmen und den gesamten Hohlraum 20' ausfüllen. Es kann jedoch entgegen den zuvor beschriebenen Ausführungen nicht in den variablen Raum 17 gelangen. Die ringförmige Falte hat somit nur die Funktion eines Federspeichers und erlaubt, die axiale Verschiebung des Dosierelementes und dessen Rückführung in die Ausgangslage. Insbesondere auch bei der Dosierung von riesel- oder schüttfähigen Medien, wie beispielsweise Waschpulver, ist eine solche Dosierung äusserst vorteilhaft. Gelangt nämlich kein Waschpulver in den variablen Raum, so kann das Medium auch nicht agglomerieren, wodurch die gesamte Funktion des Systemes verhindert würde.

In der Dosierlage mit geschlossenem Verschluss wird somit der gesamte Hohlraum 20' gefüllt. Hierzu ist es sinnvoll, sowohl den Kunststoffbehälter als auch das Dosierelement 20 aus transparentem Kunststoff zu fertigen. Ist das Dosierelement 20 voll, entfernt man den Druck auf den Verschluss, die Oeffnungen 29 kommen in den Dichtbereich 14 zu liegen und man kann den Verschluss beziehungsweise den Deckel 8 öffnen. Nun kann das schütt- oder rieselfähige Medium gleich aus einem Messbecher entleert werden.

Auch hier kann der Dichtbereich 14 durch ein Führungsteil 31 realisiert sein.

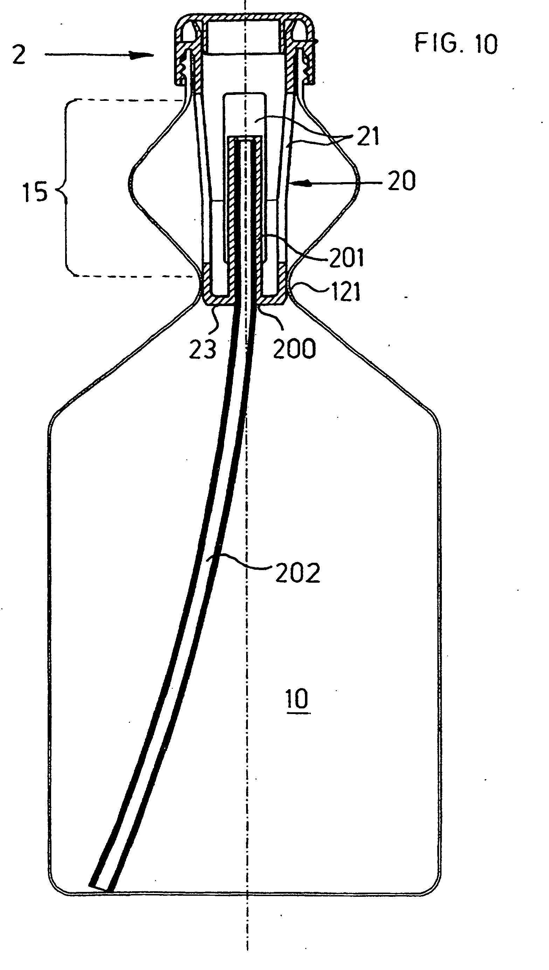

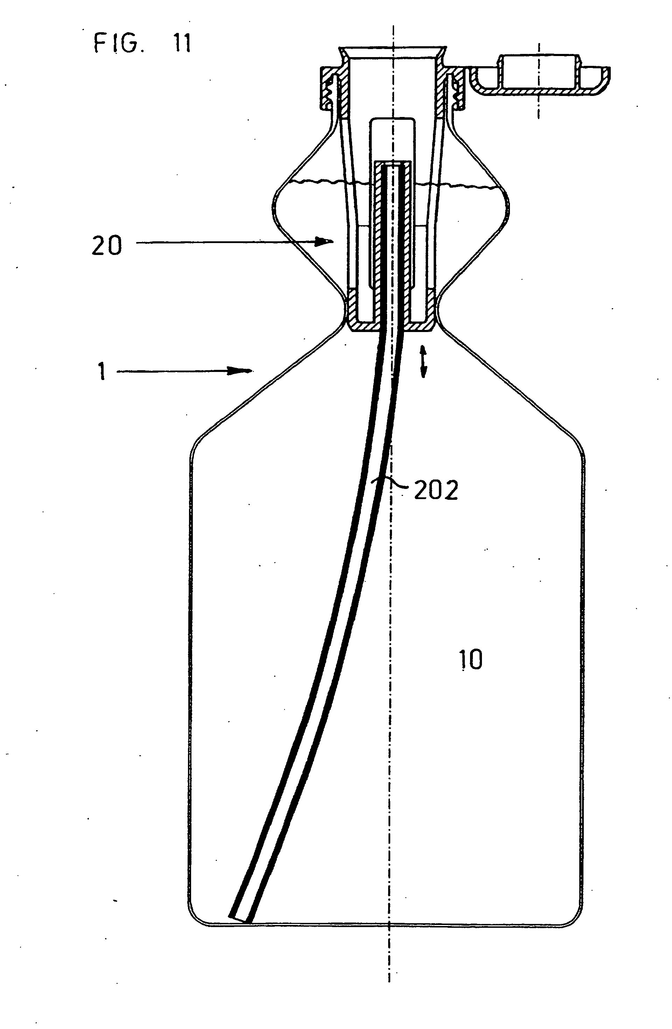

Letztlich ist in den Figuren 10 und 11 auch noch eine siphonartige Lösung dargestellt. Während bei den bisher beschriebenen Varianten der axial komprimierbare Bereich 15 immer zum Füllen einer Dosiermenge verwendet worden ist, erlaubt hier der axial komprimierbare Bereich die Veränderung, hier insbesondere die Reduzierung der Dosiermenge. Der variierbare Raum 17 wird auch dazu verwendet, eine kommunizierende Verbindung zwischen Dosierelement 20 und Vorratsraum 10 zu erreichen, doch dient dies hier dazu, die Dosiermenge einzustellen.

Das Dosierelement 20 hat hier im Boden 23 einen Einlass 200, an den sich ein nach oben erstreckendes Steigrohr 201 anschliesst. Im Steigrohr 201 ist ein Zufuhrschlauch 202 gehalten, der sich vom oberen Ende des Steigrohres 201 bis zum Boden des Behälters 1 erstreckt.

Die Höhe des Steigrohres 201 kann beliebig sein. Die seitlichen Längsöffnungen 21 erstrecken sich praktisch über die gesamte Länge des zapfenförmigen Dosierelementes 20 hinweg, so dass das zu dosierende flüssige Medium auch in den variablen Raum 17 gelangt. Der variable Raum dient hier auch als Dosierkammer und kann entsprechend mit Niveaumarkierungen versehen sein.

Durch Druck auf den Vorratsraum 10 des Kunststoffbehälters 1 strömt Medium über den Zufuhrschlauch 202 und das Steigrohr 201 in das Dosierelement 20 und den variablen Raum 17. Uebersteigt die dosierte Menge das Steigrohr 201, so strömt sie von selber wieder zurück, oder wird sogar aktiv zurückgesogen, wenn kein Druck auf dem Vorratsraum 10 mehr anliegt. Damit ist sichergestellt, dass immer bis zur Obergrenze des Steigrohres 201 das Dosierelement und der Raum 17 gefüllt sind.

Durch Druck auf den geschlossenen Verschluss 2 können die Längsöffnungen 21 in kommunizierende Verbindung mit dem Vorratsraum 10 unterhalb der Einschnürung 121 gebracht werden und eine entsprechend gewünschte Menge kann zurückfliessen. Danach kann der Verschluss 2 geöffnet werden und die gewünschte Menge kann ausgegossen werden.

Auch hier wird man vorteilhafterweise den Kunststoffbehälter transparent fertigen. Anwendung finden solche Systeme bei Mundspülmitteln, Weichspülmitteln oder auch bei gewissen Lebensmitteln oder Getränken, die verdünnt werden sollen.

## Patentansprüche

1. Dosierelement und Kunststoffbehälter mit einem Vorratsraum (10), wobei der Kunststoffbehälter eine Schulterpartie (11) aufweist, die sich zu einer Einschnürung (121) verjüngt und oberhalb dem Behälterhals (12) angeformt ist, wobei der Behälterhals am Ausgussbereich (16) Befestigungsmittel (13) zur mittel- oder unmittelbaren Befestigung eines Verschlusses (2) aufweist, wobei die der Schulterpartie (11) anschliessende Einschnürung (121) als Dichtbereich (14) zur dichtenden verschieblichen Durchführung des Dosierelementes (20) gestaltet ist, **dadurch gekennzeichnet, dass** ein axial komprimierbarer Bereich (15) des Kunststoffbehalters, der sich vom Ausgussbereich (16) bis zur Einschnürung (121) erstreckt, durch mindestens eine als Balg wirkende, ringförmige Falte gebildet ist, wodurch das am Ausgussbereich (16) befestigbare Dosierelement (20) durch mittel- oder unmittelbaren Druck auf den Behälterhals (12) das Dosierelement (20) von einer dichtenden in eine kommunizierende Lage im Dichtbereich (14) verschiebt, unter axialer Verkürzung des Bereiches (15) des Behälterhalses (12).

2. Dosierelement und Kunststoffbehälter nach Anspruch 1, **dadurch gekennzeichnet, dass** die Einschnürung (121) so verlängert ist, dass sie einen Führungsbereich (122) bildet.

3. Dosierelement und Kunststoffbehälter mit Verschluss nach Anspruch 1, **dadurch gekennzeichnet, dass** in der Einschnürung (121) ein Führungsteil (31) eingesetzt ist, das als Führungsbereich wirkt.

4. Dosierelement und Kunststoffbehälter nach Anspruch 1, wobei das Dosierelement (20) mit einem unteren zylindrischen Abschnitt (24) versehen ist, der verschieblich in der Einschnürung (121) beziehungsweise im Führungsbereich (122) beziehungsweise im Führungsteil (31) des Behälters gehalten ist und dessen Vorratsraum (10) gegenüber dem Innenraum (20') des Dosierelementes je nach Lage in kommunizierende Verbindung oder sperrende Verbindung bringt, **dadurch gekennzeichnet, dass** das Dosierelement (20) mittels Befestigungsmitteln (4, 13) mit dem Ausgussbereich (16) lagefest verbunden ist.

5. Dosierelement und Kunststoffbehalter nach Anspruch 4, **dadurch gekennzeichnet, dass** der Innenraum (20') des Dosierelementes (20) durch einen zylindrischen Abschnitt (24) und einen daran anschliessenden sich konisch erweiternden Abschnitt (25) gebildet ist und die Wände mindestens des zylindrischen Abschnittes (24) Längsöffnungen (21,29) aufweisen.

6. Dosierelement und Kunststoffbehalter nach Anspruch 4, **dadurch gekennzeichnet, dass** das Dosierelement mit einem Aussengewinde (5) zur Anbringung eines Verschlusses (2,6) versehen ist.

7. Dosierelement und Kunststoffbehälter nach Anspruch 4, **dadurch gekennzeichnet, dass** das Dosierelement einstückig mit einem Schwenkscharnierverschluss (2) versehen ist.

8. Dosierelement und Kunststoffbehälter nach Anspruch 4, **dadurch gekennzeichnet, dass** das Dosierelement (20) einen geschlossenen Boden (23) aufweist.

9. Dosierelement und Kunststoffbehälter nach Anspruch 4, **dadurch gekennzeichnet, dass** das Dosierelement (20) ein den Boden durchsetzendes Steigrohr (201) aufweist in dem ein Zufuhrschlauch (202) gehalten ist.

## Claims

1. A dosing element and a plastic container with a storage space (10), wherein the plastic container comprises a shoulder part (11) which tapers into a constriction (121) and is integrally formed above the container neck (12), wherein the container neck at the pour-out region (16) comprises fastening means (13) for the indirect or direct fastening of a closure (2), wherein the constriction (121) connecting to the shoulder part (11) is designed as a sealing region (14) for the sealed displaceable passage of the dosing element (20), **characterised in that** an axially compressible region (15) of the plastic container which extends from the pour-out region (16) up to the constriction (121) is formed by at least one annular fold acting as a bellows, by which means the dosing element (20) fastenable on the pour-out region (16), by way of indirect or direct pressure on the container neck (12) displaces the dosing element (20) from a sealing into a communicating position in the sealing region (14) amid the axial shortening of the region (15) of the container neck (12).

2. A dosing element and plastic container according to claim 1, **characterised in that** the constriction (121) is extended such that it forms a guide region (122).

3. A dosing element and plastic container according to claim 1, **characterised in that** a guide part (31) is applied in the constriction (121), said guide part acting as a guide region.

4. A dosing element and plastic container according to claim 1, wherein the dosing element (20) is provided with a lower cylindrical section (24) which is displaceably held in the constriction (121) or in the guide region (122) or in the guide part (31) of the container and brings its storage space (10) into communicating connection or blocking connection with respect to the inner space (20') of the dosing element depending on the position, **characterised in that** the dosing element (20) is connected to the pour-out region (16) in a positionally secure manner by way of fastening means (4, 13).

5. A dosing element and plastic container according to claim 4, **characterised in that** the inner space (20') of the dosing element (20) is formed by a cylindrical section (24) and a conically widening section (25) connecting thereto, and the walls at least of the cylindrical section (24) comprise longitudinal openings (21, 29).

6. A dosing element and plastic container according to claim 4, **characterised in that** the dosing element is provided with an outer thread (5) for attaching a closure (2, 6).

7. A dosing element and plastic container according to claim 4, **characterised in that** the dosing element is provided with a pivot hinge closure (2) as one piece.

8. A dosing element and plastic container according to claim 4, **characterised in that** the dosing element (20) has a closed base (23).

9. A dosing element and plastic container according to claim 4, **characterised in that** the dosing element (20) has an riser (201) passing through the base in which a flexible supply tubing (202) is held.

## Revendications

1. Dispositif de dosage et récipient en plastique avec un espace d'approvisionnement (10), auquel cas le récipient en plastique présente une partie d'épaulement (11) qui s'effile vers un étranglement (121) qui est formé au-dessus du col du récipient (12), auquel cas le col du récipient présente dans la zone de décharge (16) un moyen de fixation (13) pour une fixation indirecte ou directe d'une fermeture (2), auquel cas l'étranglement (121) adjacent à la partie d'épaulement est façonné comme secteur étanche (14) pour l'application étanche et déplaçable du dispositif de dosage (20), **caractérisé par le fait qu'**un secteur (15) axialement comprimable du récipient en plastique qui s'étend de la zone de décharge (16) jusqu'à l'étranglement (121) est formé par au moins une bosse circulaire agissant en tant que soufflet, grâce à quoi le dispositif de dosage (20) susceptible d'être fixé à la zone de décharge (16) par la pression directe ou indirecte sur le col du récipient déplace le dispositif de dosage (20) d'une situation étanche à une situation communicante dans le secteur étanche (14), sous un raccourcissement axial du secteur (15) du col du récipient (12).

2. Dispositif de dosage et récipient en plastique selon la revendication 1, **caractérisé par le fait que** l'étranglement (121) est prolongé de telle sorte qu'il forme un secteur de guidage (122).

3. Dispositif de dosage et récipient en plastique selon la revendication 1, **caractérisé par le fait qu'**une partie de guidage (31) est placée dans l'étranglement (121) qui agit en tant que secteur de guidage.

4. Dispositif de dosage et récipient en plastique selon la revendication 1, auquel cas le dispositif de dosage (20) est pourvu d'une subdivision cylindrique (24) inférieure qui est maintenue déplaçable dans l'étranglement (121), ou respectivement dans le secteur de guidage (122), ou respectivement dans la partie de guidage (31) du récipient et amène son espace d'approvisionnement(10) dans une jonction communicante ou une jonction bloquante par rapport à l'intérieur (20) du dispositif de dosage selon la position, **caractérisé par le fait que** le dispositif de dosage (20) est relié, solidement dans la position, à la zone de décharge à l'aide de moyens de fixation (4, 13).

5. Dispositif de dosage et récipient en plastique selon la revendication 4, **caractérisé par le fait que** l'intérieur (20) du dispositif de dosage (20) est formé par une subdivision cylindrique (24) et une subdivision s'élargissant de façon conique (25) y étant adjacente et que les parois au moins cylindrique de la subdivision (24) présentent des ouvertures longitudinales (21, 29).

6. Dispositif de dosage et récipient en plastique selon la revendication 4, **caractérisé par le fait que** le dispositif de dosage est pourvu d'un filetage mâle (5) pour attacher une fermeture (2,6).

7. Dispositif de dosage et récipient en plastique selon la revendication 4, **caractérisé par le fait que** le dispositif de dosage est pourvu d'une fermeture à charnière pivotante faite d'une seule pièce.

8. Dispositif de dosage et récipient en plastique selon la revendication 4, **caractérisé par le fait que** le dispositif de dosage (20) présente un fond (23) fermé.

9. Dispositif de dosage et récipient en plastique selon la revendication 4, **caractérisé par le fait que** le dispositif de dosage (20) présente un tuyau ascendant (201) traversant le fond dans lequel un tuyau d'approvisionnement (202) est maintenu.
